# EUROPEAN PATENT APPLICATION

(11) **EP 4 178 087 A1**
(43) Date of publication of application: **10.05.2023**
(21) Application number: 20949730.4
(22) Date of filing: 17.08.2020
(51) Int. Cl.: H02K 5/20, B60R 16/02

(54) **CONDUCTING MEMBER, LIQUID-COOLED CONDUCTIVE STRUCTURE, MOTOR, AND ELECTRIC CAR POWER ASSEMBLY**

(71) Applicant: Huawei Digital Power Technologies Co., Ltd., Shenzhen, Guangdong 518043 (CN)
(72) Inventor: JIANG, Shenghai, Shenzhen, Guangdong 518129 (CN); ZHANG, Weilong, Shenzhen, Guangdong 518129 (CN); ZHANG, Litian, Shenzhen, Guangdong 518129 (CN); MA, Wenwu, Shenzhen, Guangdong 518129 (CN); REN, Tianyou, Shenzhen, Guangdong 518129 (CN); TANG, Zhengyi, Shenzhen, Guangdong 518129 (CN)
(74) Representative: Gill Jennings & Every LLP
(86) International application number: PCT/CN2020/109586
(87) International publication number: WO 2022/036517

(57) **Abstract**

This application relates to a conductive component, a liquid cooling conductive structure, a motor, and an electric vehicle powertrain. A conductive component is electrically connected between a first electronic device and a second electronic device, a liquid cooling channel is arranged in the conductive component, and the liquid cooling channel is provided with an inlet and an outlet, so that coolant enters the liquid cooling channel from the inlet and flows out from the outlet, and the outlet is adjacent to an electrical connection between the conductive component and the second electronic device, so that the coolant performs liquid cooling heat dissipation on the electrical connection between the conductive component and the second electronic device. The conductive component provided in this application has both functions of conducting electricity and liquid cooling heat dissipation.

## Description

### TECHNICAL FIELD

This application relates to the technical field of electric vehicle powertrains, and in particular, to a conductive component, a liquid cooling conductive structure, and a motor with the liquid cooling conductive structure.

### BACKGROUND

With development of electric vehicles, requirements for powertrain miniaturization are increasing. A motor and motor control unit (MCU, Motor Control Unit) are key components of an electric vehicle powertrain. How to miniaturize the electric vehicle powertrain and enable the electric vehicle powertrain to have better heat dissipation performance is a challenge to be overcome in the industry. In the conventional technology, a conductive connection between a motor and an MCU is implemented by using a metal connector. In a working process of the motor, the metal connector also heats up. Heat dissipation is generally implemented by natural cooling of the metal connector. However, this solution has a low heat dissipation capability, affecting stability and service life of a powertrain.

### SUMMARY

An embodiment of this application provides a conductive component, and the conductive component has electrical conductivity and a heat dissipation capability.

According to a first aspect, an embodiment of this application provides a conductive component, and the conductive component has a conductive function. The conductive component is electrically connected between a first electronic device and a second electronic device and can implement current transmission between the first electronic device and the second electronic device, for example, can implement current transmission between a motor control unit and a motor. The conductive component further has a liquid cooling heat dissipation function. A liquid cooling channel is arranged in the conductive component. The liquid cooling channel is provided with an inlet and an outlet, so that coolant enters the liquid cooling channel from the inlet and flows out from the outlet. The outlet is adjacent to an electrical connection between the conductive component and the second electronic device, so that the coolant performs liquid cooling heat dissipation on the electrical connection between the conductive component and the second electronic device.

The conductive component provided in this application can implement a conductive function between the first electronic device and the second electronic device. Moreover, by using the liquid cooling channel arranged inside the conductive component, while implementing the conductive function, the conductive component performs liquid cooling heat dissipation on the electrical connection between the conductive component and the second electronic device by using the coolant flowing through the liquid cooling channel and then out from the outlet. When the conductive component is applied in an electric vehicle powertrain, the conductive component is electrically connected between a motor control unit and a motor stator. In this case, the coolant serves as coolant in a cooling system of the electric vehicle powertrain. After flowing through a reducer, the coolant enters the motor, and may flow into a flow channel of a main conductive part through a liquid inlet channel. After being sprayed on an outlet part, the coolant flows back to the cooling system through a pipeline inside the motor, thereby forming a liquid cooling circulation and continuously dissipating heat.

According to the conductive component provided in this application, the conductive component is hollow because the liquid cooling channel is arranged inside the conductive component. Therefore, in a process of conducting electricity between the first electronic device and the second electronic device, a current density can be improved, and a high current density enables the conductive component to have good conductivity.

The conductive component is made of a conductive material, and a specific material may be a metal material, for example, copper, aluminum, or silver.

In a possible implementation, the conductive component includes an inlet part, an outlet part, and a main conductive part connected between the inlet part and the outlet part, the inlet part is configured to electrically connect to the first electronic device, where the inlet is formed at the inlet part, and the outlet part is configured to electrically connect to the second electronic device, where the outlet is formed at the main conductive part, and the outlet is located at a position at which the main conductive part is connected to the outlet part. The liquid cooling channel extends from the inlet part to an end of the main conductive part far away from the inlet part, and the outlet of the liquid cooling channel faces the outlet part. The outlet facing the outlet part may be understood as the outlet part being arranged at a position facing the outlet. To be specific, the coolant flowing out from the outlet can flow directly to the position of the outlet part, that is, the coolant can be sprayed directly to the outlet part. In this application, the outlet of the liquid cooling channel is arranged to face the outlet part, so that the coolant is enabled to be sprayed directly to the outlet part after flowing out from the outlet, thereby improving liquid cooling efficiency of the outlet part. A specific implementation in which the outlet of the liquid cooling channel faces the outlet part may be that the outlet faces the outlet part, that is, the outlet faces the electrical connection between the conductive component and the second electronic device. Another specific implementation may be as follows: A direction of the outlet is not facing the outlet part, but has partial deviation from the position of the outlet part. However, the coolant may also be enabled to be sprayed directly to the electrical connection between the conductive component and the second electronic device. In another possible implementation, a direction of the outlet of the liquid cooling channel may not face the outlet part, but may face a barrier, where the barrier may be a partial structure of the conductive component, or may be an environmental element at a position at which the conductive component is mounted. For example, the barrier may be a baffle plate on a motor housing. Such an arrangement enables the coolant to be sprayed to another object, be reflected to the outlet part by the another object, or be obliquely sprayed at a specific angle with respect to the direction of the outlet part.

In a possible implementation, the liquid cooling channel includes a liquid inlet channel in the inlet part and a flow channel in the main conductive part, an outlet of the flow channel is the outlet of the liquid cooling channel, and an inner wall of the flow channel is a smooth surface. The flow channel with a smooth surface is easy to manufacture and has an advantage of low costs. In addition, standard pipe fittings may be directly selected. For example, a copper pipe is directly used, and cross sections of inner and outer surfaces of the copper pipe may be circular, square, oval, I-shaped, or the like.

In a possible implementation, the liquid cooling channel includes a liquid inlet channel in the inlet part and a flow channel in the main conductive part, an outlet of the flow channel is the outlet of the liquid cooling channel, and an inner wall of the flow channel is provided with an inwardly convex toothed structure. The inwardly convex toothed structure is designed so that a contact area of the coolant and the main conductive part is increased, thereby helping to increase a heat exchange area. There may be one, two, or more inwardly convex toothed structures. In a possible implementation, the inwardly convex toothed structure extends from one end of the main flow channel that is near the inlet part to one end of the main flow channel that is near the outlet part. The main conductive part includes a central axis, and the central axis extends from the inlet part to the outlet part. When there are two inwardly convex toothed structures, the inwardly convex toothed structures may be symmetrically distributed on two sides of the central axis. When there are three or more inwardly convex toothed structures, distribution of the inwardly convex toothed structures may be evenly spaced circumferential distribution.

In a possible implementation, the liquid cooling channel includes a liquid inlet channel in the inlet part and a flow channel in the main conductive part, an outlet of the flow channel is the outlet of the liquid cooling channel, and the flow channel includes at least two parallel sub-flow channels, the sub-flow channels are isolated from each other and each extend from a connection of the flow channel and the liquid inlet channel to the outlet of the flow channel. For example, a shape of a cross section of each sub-flow channel is circular. Cross section sizes of a plurality of sub-flow channels may be the same, and the plurality of sub-flow channels may be arranged in a honeycomb shape or in an array arrangement. The sub-flow channel is arranged so that the contact area of the coolant and the main conductive part can also be increased, thereby helping to increase a heat exchange area. There may be two or more sub-flow channels. The coolant is distributed from the liquid inlet channel of the inlet part to the sub-flow channels. The arrangement of the sub-flow channels complicates a structure of the main conductive part, but can divide one stream of coolant into a plurality of streams of coolant, which is similar to a difference between a faucet and a shower head. Therefore, the sub-flow channels form a structure of a shower head at the position of the outlet part, thereby expanding a spraying area and improving a liquid cooling heat dissipation effect.

In a possible implementation, an outer surface of the main conductive part is a smooth surface, and a cross section of the outer surface of the main conductive part may be circular, square, oval, polygonal, or the like. The main conductive part with a smooth surface has a simple structure, so that materials are easily selected. For example, a tubular structure such as a copper pipe or a square pipe may be directly selected.

In a possible implementation, a fin structure is protruded from an outer surface of the main conductive part. A fin can improve a heat dissipation capability of the main conductive part. The fin structure may be arranged on a part of the outer surface of the main conductive part, or may be spaced circumferentially on the outer surface of the main conductive part. The fin structure and the main conductive part may be made of a same material and integrated by welding. The fin structure may alternatively be integrally formed on the outer surface of the main conductive part by machining.

In a possible implementation, an outer surface of the main conductive part is provided with a heat absorption and dissipation film, and the heat absorption and dissipation film is configured to improve heat dissipation efficiency of the main conductive part. For example, the heat absorption and dissipation film may be made of graphite.

In a possible implementation, the inlet part includes a first end face, a second end face, and a side face connected between the first end face and the second end face. The first end face and the second end face may be square, circular, or any other shape. The side face may be a cylindrical surface or be formed by a plurality of successively connected planes, and outer contours of the first end face and the second end face may be the same. The main conductive part is fixedly connected to the side face, a conductive joint is formed between the main conductive part and the first end face, a liquid inlet pipe is formed between the main conductive part and the second end face, a liquid inlet channel is arranged in the liquid inlet pipe, the liquid inlet channel communicates with a flow channel arranged in the main conductive part, the liquid inlet channel and the flow channel jointly form the liquid cooling channel, and the inlet of the liquid cooling channel is located on the second end face. The inlet part, the main conductive part, and the outlet part each may be of a metal structure, and the inlet part and the main conductive part may be fixedly connected by welding. The outlet part may also be welded to the main conductive part. It may be understood that, a welding connection may be replaced with a threaded connection or an integral crimping connection. This is not limited in this application, provided that a sealing connection between the liquid inlet channel and the flow channel of the main conductive part is ensured, and no liquid leakage occurs.

Specifically, the conductive joint and the liquid inlet pipe are respectively located on two sides of the main conductive part, the conductive joint and the liquid inlet pipe may be of columnar structures with similar appearances, and the conductive joint, the liquid inlet pipe, and one end of the main conductive part form a T-shaped structure.

In a possible implementation, a threaded hole is arranged on the first end face, and the threaded hole is configured to mount a conductive sheet electrically connected to the first electronic device (for example, a motor control unit). Specifically, a stud passes through a via hole on the conductive sheet and is fixed in the threaded hole. The threaded hole is isolated from and not communicating with the liquid inlet channel, so that the coolant does not enter the threaded hole, and reliability of the electrical connection between the conductive sheet and the conductive joint of the inlet part is ensured.

In a possible implementation, an opening of one end of the liquid inlet channel is located on the second end face, and an opening of the other end of the liquid inlet channel is located on a side wall of the liquid inlet pipe and is interconnected to the flow channel in the main conductive part.

In a possible implementation, the inlet part is an integrated conductive structure, and the first end face and the second end face are opposite in directions. This implementation provides a specific structural form of the inlet part, the directions of the first end face and the second end face are separately used to match a mounting position of a motor housing, the liquid cooling conductive structure is mounted to the motor housing, the first end face faces an exterior of the motor housing, and the second end face faces the exterior of the motor housing. The first end face is configured to fix the conductive sheet electrically connected to the first electronic device (for example, a motor control unit), and the second end face has an opening of the liquid inlet channel. The opening is located in a coolant channel in the motor housing, so that coolant in the coolant channel can enter the liquid inlet channel through the opening.

According to a second aspect, this application provides a liquid cooling conductive structure, including an insulator and the conductive component according to any one of the possible implementations of the first aspect, where the insulator wraps a periphery of the conductive component to insulate the conductive component from another conducting component. The insulator is configured to mount the liquid cooling conductive structure in an application environment, and the insulator may be of an insulating material such as plastic or silica gel.

In a possible implementation, the liquid cooling conductive structure includes an insulator and at least two conductive components, and the insulator wraps the at least two conductive components. Main conductive parts of the at least two conductive components are arranged side by side in a coplanar manner. The insulator includes a plate-like part, and the main conductive part is embedded in the plate-like part. The insulator wraps peripheries of the at least two conductive components, so that adjacent conductive components are isolated and spaced, and the conductive components and a motor housing are isolated and spaced, thereby maintaining conductive performance during electricity conducting.

When a three-phase alternating current is transmitted between a first electronic device and a second electronic device, for example, when an alternating current (three-phase electricity) is transmitted between a motor control unit and a motor, there are three conductive components, and main conductive parts of the three conductive components may be arranged in a coplanar manner. In this way, a plate-like part wrapping the main conductive parts is of a flat plate structure, which facilitates mounting to the motor housing.

In a possible implementation, a material of the insulator may be a flexible insulating material, for example, silica gel, so that in a process of mounting the liquid cooling conductive structure to the motor, a position of each conductive component can be adjusted. After the insulator wraps the three conductive components, a part of the insulator connected between the conductive components can be deformed. Therefore, when being mounted to the motor housing, the liquid cooling conductive structure may match various mounting environments. For example, when a mounting surface on the housing is not flat, the insulator may be well attached to the mounting surface because the insulator can be deformed. In addition to an advantage of being convenient for mounting, configuration of the insulator made of a flexible material provides cushioning against vibration in the environment, so that vibration of the motor can be adsorbed, and smooth operation of an electric vehicle is ensured.

In a possible implementation, a shield is arranged on a periphery of an outlet part of each conductive component, and an outlet of a flow channel is located between the outlet part and the shield. The shield is made of an insulating material and arranged between adjacent outlet parts, so that the adjacent outlet parts can be insulated. The shield also can block coolant and reflect the coolant. Therefore, after being sprayed out, the coolant is sprayed on the outlet part in a more centralized manner, thereby improving liquid cooling efficiency. The outlet part may be understood as a position of an electrical connection between the conductive component and the second electronic device.

In a possible implementation, the shield includes a first plate and two second plates, one end of each of the two second plates is respectively connected to two opposite sides of the first plate, and a mounting opening is formed between the other ends of the two second plates. A position of the mounting opening is used to connect a connector of a motor stator winding to the outlet part (that is, the electrical connection between the conductive component and the second electronic device). The outlet of the flow channel is located between the first plate and the outlet part. The outlet part forms a wiring position of the liquid cooling conductive structure and the motor stator winding. Because being blocked by the first plate, the coolant can flow directly to the wiring position after flowing out from the outlet, and the first plate and the second plates can block the coolant, so as to prevent the coolant from being sprayed to another position. In addition, the coolant sprayed to the shield may also be reflected to the wiring position at the outlet part, thereby improving a cooling effect.

In a possible implementation, the first plate and the two second plates are all flat plates, and the two second plates are parallel to each other and perpendicular to the first plate. In another possible implementation, the shield may include an arcuate plate-like structure. For example, the first plate may be arcuate, or the second plates may be arcuate, or the first plate and the second plates are all arcuate and together form an arc reflecting surface with a same curvature, and the arc reflecting surface faces the outlet part. The first plate and the second plates may be of a split structure, and there may be a gap between the first plate and each of the second plates, or the first plate and the second plates may be seamlessly interconnected. Alternatively, the first plate and the second plates may be of an integrated structure.

According to a third aspect, this application provides a motor, including a motor housing, a stator, and the liquid cooling conductive structure according to any possible implementation of the second aspect, where the liquid cooling conductive structure is mounted to the motor housing, a liquid cooling channel communicates with a coolant channel in the motor housing, a second electronic device is the stator, and a first electronic device is a motor control unit.

In a possible implementation, a filter structure is arranged in the coolant channel in the motor housing. After entering the motor, coolant enters the liquid cooling channel through the filter structure, and flows inside a conductive component. The filter structure can filter out large-particle impurities in the coolant to prevent the liquid cooling conductive structure from being blocked.

According to a fourth aspect, this application provides an electric vehicle powertrain, including a motor control unit and the motor according to the third aspect, where a conductive joint of a liquid cooling conductive structure is electrically connected to the motor control unit. The conductive joint is connected to the motor control unit through a copper busbar.

The liquid cooling conductive structure provided in this application may be further applied to another power supply field, for example, a specific application scenario such as an inverter or a power supply device.

### BRIEF DESCRIPTION OF DRAWINGS

FIG. 1 is a block diagram of a connection relationship between components of a motor drive system of an electric vehicle powertrain according to an implementation of this application;
FIG. 2 is an architectural block diagram of connections between a motor control unit, a power battery, and a drive motor in an electric vehicle powertrain according to an implementation of this application;
FIG. 3 is a schematic three-dimensional diagram in one direction of a conductive component in a liquid cooling conductive structure according to an implementation of this application;
FIG. 4 is a schematic three-dimensional diagram in another direction of a conductive component in a liquid cooling conductive structure according to an implementation of this application;
FIG. 5 is a schematic sectional view of a main conductive part in a conductive component in a liquid cooling conductive structure according to an implementation of this application;
FIG. 6 is a schematic cross-sectional view of the main conductive part shown in FIG. 5;
FIG. 7 is a schematic sectional view of a main conductive part in a conductive component in a liquid cooling conductive structure according to an implementation of this application;
FIG. 8 is a schematic cross-sectional view of the main conductive part shown in FIG. 7;
FIG. 9 is a schematic cross-sectional view of a main conductive part in a conductive component in a liquid cooling conductive structure according to an implementation of this application;
FIG. 10 is a schematic cross-sectional view of a main conductive part in a conductive component in a liquid cooling conductive structure according to an implementation of this application;
FIG. 11 is a schematic cross-sectional view of a main conductive part in a conductive component in a liquid cooling conductive structure according to an implementation of this application;
FIG. 12 is a schematic sectional view of a main conductive part in a conductive component in a liquid cooling conductive structure according to an implementation of this application;
FIG. 13 is a schematic cross-sectional view of a main conductive part in a conductive component in a liquid cooling conductive structure according to an implementation of this application;
FIG. 14 is a schematic cross-sectional view of a main conductive part in a conductive component in a liquid cooling conductive structure according to an implementation of this application;
FIG. 15 is a schematic distribution diagram of three conductive components in a liquid cooling conductive structure according to an implementation of this application;
FIG. 16 is a schematic three-dimensional diagram in one direction of a liquid cooling conductive structure according to an implementation of this application;
FIG. 17 is a schematic three-dimensional diagram in another direction of a liquid cooling conductive structure according to an implementation of this application;
FIG. 18 is a schematic three-dimensional diagram in still another direction of a liquid cooling conductive structure according to an implementation of this application;
FIG. 19 is a schematic sectional view in one direction of a liquid cooling conductive structure according to an implementation of this application;
FIG. 20 is a schematic sectional view in another direction of a liquid cooling conductive structure according to an implementation of this application;
FIG. 21 is a schematic three-dimensional diagram in which a motor is connected to a motor control unit according to an implementation of this application;
FIG. 22 is a schematic three-dimensional diagram in which a motor is connected to a motor control unit according to an implementation of this application, and represents an internal circuit board and an electrical connection structure of the motor control unit;
FIG. 23 is a schematic partial sectional view of a motor according to an implementation of this application; and
FIG. 24 is another schematic partial sectional view of a motor according to an implementation of this application.

### DESCRIPTION OF EMBODIMENTS

Embodiments of this application provide a conductive component and a liquid cooling conductive structure, where the conductive component and the liquid cooling conductive structure are applied to an electric vehicle, and are connected between a motor control unit and a drive motor in the electric vehicle, so as to implement a conductive connection between the motor control unit and the drive motor, and further have a function of liquid cooling heat dissipation. The liquid cooling conductive structure can introduce coolant. The liquid cooling conductive structure has the heat dissipation function, and also can cool a wiring position of a stator of the drive motor through spraying and can lubricate a bearing.

The liquid cooling conductive structure provided in this application may be further applied to another power supply field, for example, a specific application scenario such as an inverter or a power supply device. It may be understood that the liquid cooling conductive structure provided in this application is electrically connected between a first electronic device and a second electronic device, and has functions of electric conduction and heat dissipation.

An electric vehicle is used as an example. The electric vehicle may be a battery electric vehicle (BEV, Battery Electric Vehicle), a hybrid electric vehicle (HEV, Hybrid Electric Vehicle), and a plug-in hybrid electric vehicle (PHEV, Plug-In Hybrid Electric Vehicle).

The following describes embodiments of this application with reference to the accompanying drawings. In embodiments of this application, a battery electric vehicle is used as an example to describe a structure of the electric vehicle.

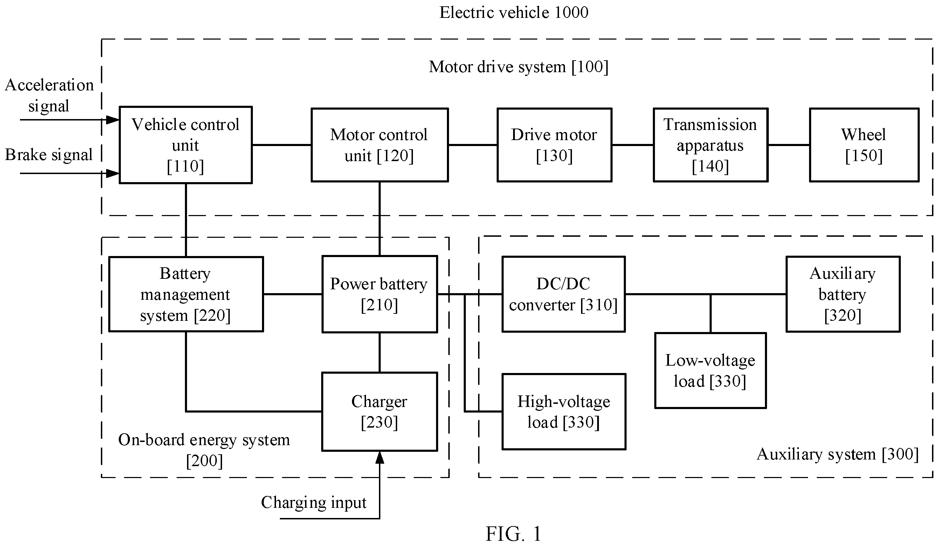

As shown in FIG. 1, an electric vehicle 1000 specifically includes a motor drive system 100 configured to drive the vehicle to travel, an on-board energy system 200 configured to provide energy, and an auxiliary system 300. Specifically, the motor drive system 100 includes a vehicle control unit 110, a motor control unit 120, a drive motor 130, a transmission apparatus 140, and a wheel 150. The on-board energy system 200 includes a power battery 210, a battery management system 220, and a charger 230.

The vehicle control unit (VCU, Vehicle Control Unit) 110, also referred to as a powertrain control unit, is a core control unit of the entire vehicle, and is equivalent to a brain of the vehicle. The vehicle control unit collects signals from an accelerator pedal, a brake pedal, and another component, makes judgment correspondingly, and controls actions of control units of lower-layer components to drive the vehicle to travel normally. As a command and management center of the vehicle, the vehicle control unit has main functions such as drive torque control, braking energy optimization control, vehicle energy management, maintenance and management of CAN (Controller Area Network, controller area network) network, fault diagnosis and processing, and vehicle status monitoring. The vehicle control unit controls operation of the vehicle. Therefore, quality of the vehicle control unit directly determines stability and safety of the vehicle.

The motor control unit 120 is an integrated circuit that controls, in a manner of active working, the drive motor 130 to work according to a set direction, speed, angle, and response time, and is in a communication connection to the vehicle control unit 130. In the electric vehicle 1000, a function of the motor control unit 120 is to convert electric energy stored in the power battery 210 into electric energy required by the drive motor 130 according to instructions from a gear, an accelerator, a brake, and the like, to control a traveling status of the electric vehicle 1000, such as starting to run, a drive/reverse speed, and climbing strength. Alternatively, the motor control unit 120 helps the electric vehicle 1000 to brake and store a part of braking energy in the power battery 210.

The drive motor 130 (commonly referred to as a motor) refers to an electromagnetic apparatus that converts or transmits electrical energy according to the law of electromagnetic induction. The drive motor 130 is electrically connected to the motor control unit 120 and mechanically connected to the transmission apparatus 140. A main function of the drive motor 130 is to generate driving torque as a motive power source for the wheel 150. In some embodiments, the drive motor 130 may also convert mechanical energy into electrical energy, that is, may be used as a generator. Specifically, the drive motor 130 may be but is not limited to a permanent magnet synchronous motor (PMSM, Permanent-Magnet Synchronous Motor).

The drive motor 130 includes a stator and a rotor, and the stator includes a stator winding. The rotor may rotate about a central axis relative to the stator. The drive motor 130 may be controlled by causing a universal sinusoidal current to flow through the stator winding. An amplitude and a frequency of the current can be varied to control torque and a speed of the rotor. A stator current generates an electromagnetic field, and the electromagnetic field interacts with a permanent magnet as a component of the rotor. The electromagnetic field causes the rotor to rotate.

For example, the drive motor 130 may be a three-phase motor. That is, the stator winding may include three separate phase windings. To control the drive motor 130, a three-phase voltage wave or a three-phase current wave is applied to the phase windings. The three-phase wave separates signals of all phases with a 120-degree phase difference.

The transmission apparatus 140 is also mechanically connected to the wheel 150 and is configured to transmit a motive power source generated by the drive motor 130 to the wheel 150 to drive the electric vehicle 1000 to travel. In some implementations, the transmission apparatus 140 may include a drive shaft (not shown) connected between two wheels 150 and a differential mechanism (not shown) arranged on the drive shaft.

The power battery 210 is electrically connected to the motor control unit 120 and is configured to store and provide electrical energy. The power battery 210 may be but is not limited to a lead-acid battery, a lithium iron phosphate battery, a nickel-hydrogen battery, a nickel-cadmium battery, or the like. In some embodiments, the power battery 210 may alternatively be a supercapacitor.

The battery management system 220 is electrically connected to the power battery 210 and is in communication connection to the vehicle control unit 110. The battery management system 220 is configured to monitor and estimate statuses of the power battery 210 in different working conditions, to improve utilization of the power battery 210 and prevent overcharging and overdischarging of the power battery 210, thereby prolonging service life of the power battery 210. Specifically, main functions of the battery management system 220 may include real-time monitoring of a battery physical parameter; battery status estimation; online diagnosis and warning; charging, discharging and precharging control; balance management and thermal management; and the like.

The charger 230 is electrically connected to the power battery 210 and is configured to connect to an external power supply to charge the power battery 210. Specifically, when the electric vehicle 1000 is connected to the external power supply (such as a charging pile), the charger 230 converts an alternating current supplied by the external power supply into a direct current to charge the power battery 219. In addition, the battery management system 220 is also connected to the charger 230 to monitor a charging process of the power battery 210.

The auxiliary system 300 includes a DC/DC converter 310, an auxiliary battery 320, a low-voltage load 330, and a high-voltage load 340. One end of the DC/DC converter 310 is connected to the power battery 210, and the other end is separately connected to the auxiliary battery 320 and the low-voltage load 330. The DC/DC converter 310 is configured to convert a high voltage (for example, 380 V) output by the power battery 210 into a low voltage (for example, 12 V) to charge the auxiliary battery 320 and supply power to the low-voltage load 330. In some implementations, the low-voltage load 330 includes a low-voltage automotive accessory, such as a cooling pump, a fan, a heater, a power steering apparatus, and a brake. Certainly, the auxiliary battery 320 may also supply power to the low-voltage load 330. In addition, the power battery 210 is also connected to the high-voltage load 340 to supply power to the high-voltage load 340. In some implementations, the high-voltage load 340 includes a PTC heater, an air conditioning unit, and the like.

It should be noted that electronic modules in the electric vehicle 1000 may communicate by using one or more vehicle networks. The vehicle network may include a plurality of channels for communication. One channel of the vehicle network may be a serial bus such as a controller area network (Controller Area Network, CAN). One of the channels of the vehicle network may include the Ethernet defined by the family of Institute of Electrical and Electronics Engineers (IEEE) 802 standards. Another channel of the vehicle network may include discrete connections between modules and may include a power signal from the auxiliary battery 130. Different signals may be transmitted over different channels of the vehicle network. For example, a video signal may be transmitted over a high-speed channel (for example, the Ethernet) and a control signal may be transmitted over a CAN or discrete signal. The vehicle network may include any hardware and software components that assist in transmitting signals and data between modules. The vehicle network is not shown in FIG. 1, but it may be implied that the vehicle network may be connected to any electronic module present in the electric vehicle 1000. For example, the vehicle network may be present in the vehicle control unit 110 to coordinate operations of various components.

It may be understood that the structure shown in embodiments of this application does not constitute a specific limitation on the electric vehicle 1000. In another possible implementation of this application, the electric vehicle 1000 may include more or fewer components than those in the implementation shown in FIG. 1, or combine some components, or split some components, or have different component arrangements. In the implementation shown in FIG. 1, the components may be implemented by using hardware, software, or a combination of software and hardware.

The following describes in detail a structure and a corresponding function of the motor control unit 120 in this embodiment of this application.

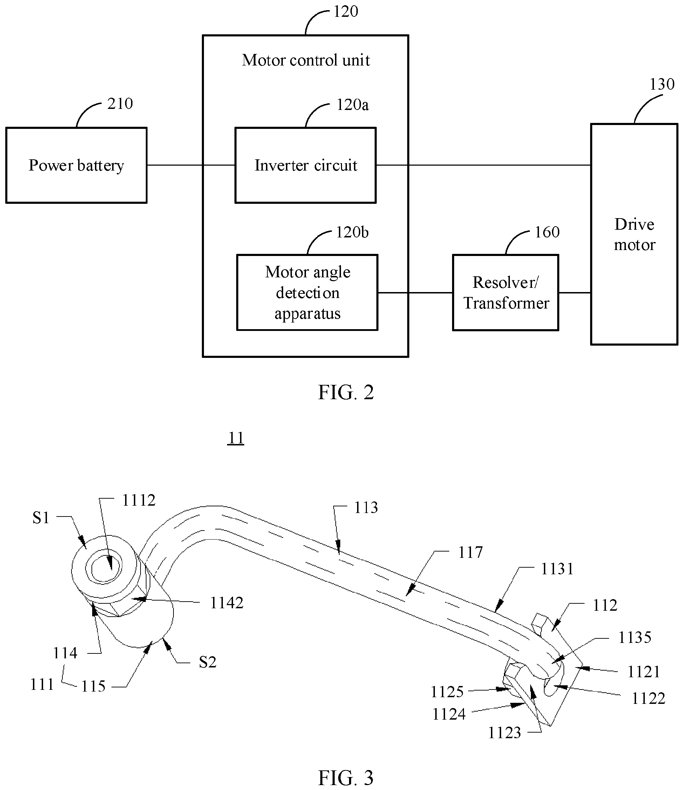

As shown in FIG. 2, the motor control unit 120 includes an inverter circuit 120a and a motor angle detection and diagnosis apparatus 120b. An input end of the inverter circuit 120a is connected to the power battery 210, and an output end of the inverter circuit 120a is connected to the drive motor 130. The inverter circuit 120a is configured to convert a high-voltage direct current output by the power battery 210 into an alternating current (for example, a three-phase alternating current) for the drive motor 130 to work.

The motor angle detection and diagnosis apparatus 120b may be connected to the drive motor 130 by using a resolver/transformer (resolver/transformer) 160 to decode resolver feedback signal output by the resolver/transformer 160, so as to obtain an electrical angle of the drive motor 130. The resolver/transformer 160 is a sensor for accurately measuring an angular position and a speed of a rotating component, such as a motor, through magnetic coupling of a primary winding and two secondary windings. The primary winding and the two orthogonal secondary windings are respectively arranged on the rotor and the stator of the motor. An excitation signal applied to the primary winding is respectively coupled in the two secondary windings to generate a sinusoidal resolver feedback signal and a cosine resolver feedback signal. The sinusoidal resolver feedback signal and the cosine resolver feedback signal may be collectively referred to as a resolver feedback signal. An angular position and rotational speed information of the rotor of the motor can be obtained by demodulating and converting the sinusoidal resolver feedback signal and the cosine resolver feedback signal.

It may be understood that a structure illustrated in this embodiment of this application does not constitute a specific limitation on the motor control unit 120. In another possible implementation of this application, the motor control unit 120 may include more components than those in the implementation shown in FIG. 2, for example, include an auxiliary power supply circuit, a charging circuit, and a voltage/current detection circuit. The motor angle detection and diagnosis apparatus 120b may also be directly connected to the drive motor 130. Alternatively, the resolver/transformer 160 is integrated inside the motor control unit 120.

A three-phase (or two-phase) output interface is arranged on the motor control unit 120, and the drive motor 130 is connected to the output interface of the motor control unit 120 by using the liquid cooling conductive structure provided in this application.

The liquid cooling conductive structure provided in this application can implement conduction of a three-phase current (or may be a two-phase current) between the motor control unit (referred to as an MCU below for simplified description) and the drive motor (referred to as a motor below for simplified description). The liquid cooling conductive structure may also be connected between other electron devices to implement an electrical connection between electron devices (single-phase current transmission may be implemented) and heat dissipation.

A conductive component is a core element of the liquid cooling conductive structure, and the conductive component may also be independently used as an electrical connector between two electronic devices and implement liquid cooling heat dissipation. There may be one conductive component to implement electrical transmission between two electron devices; there may be two conductive components to implement conduction of a two-phase current; or there may be three conductive components to implement conduction of a three-phase current.

The conductive component is made of a conductive material. A specific material may be a metal material, for example, copper, aluminum, or silver, and has solderability. The conductive component is electrically connected between the first electronic device and the second electronic device. A liquid cooling channel is arranged in the conductive component, and the liquid cooling channel is provided with an inlet and an outlet, so that coolant enters the liquid cooling channel from the inlet and flows out from the outlet. The outlet is located close to an electrical connection between the conductive component and the second electronic device. In this way, the coolant flowing out from the outlet can perform liquid cooling heat dissipation, specifically, liquid cooling heat dissipation in a manner of spraying, on the electrical connection between the conductive component and the second electronic device.

A specific structure of the conductive component is as follows:

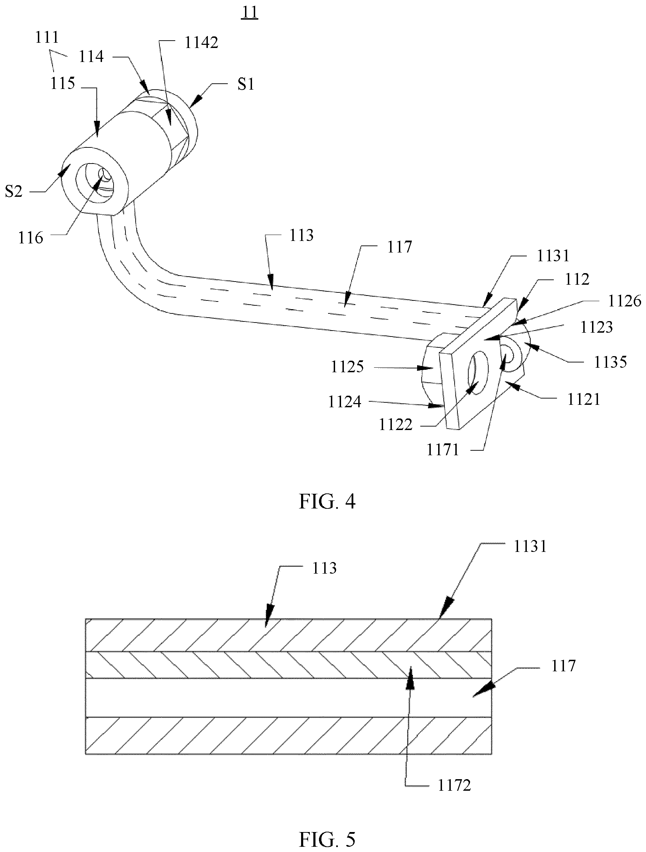

Refer to FIG. 3 and FIG. 4. A conductive component 11 includes an inlet part 111, an outlet part 112, and a main conductive part 113. An inlet of a liquid cooling channel is arranged at the inlet part 111, and an outlet of the liquid cooling channel is arranged at one end of the main conductive part 113 that is connected to the outlet part 112. The main conductive part 113 is of a hollow tubular structure, and two ends of the main conductive part 113 are respectively fixedly connected to the inlet part 111 and the outlet part 112. A channel for the coolant to flow through is arranged in the conductive component 11. The coolant enters the conductive component 11 from the inlet part 111, flows through the main conductive part 113, flows out from an end of the main conductive part 113 that is away from the inlet part 111, and then is sprayed at the outlet part 112. Specifically, a fixed connection between the main conductive part 113 and each of the inlet part 111 and the outlet part 112 may be implemented by welding, and the welding connection may be replaced with a threaded connection or an integral crimping manner. In another implementation, alternatively, the main conductive part 113 and the inlet part 111 (and/or the outlet part 112) may be integrally formed through press molding. A specific manner of the fixed connection between the main conductive part 113 and each of the inlet part 111 and the outlet part 112 is not limited in this application, provided that a sealed connection without leakage is ensured.

The inlet part 111 includes a conductive joint 114 and a liquid inlet pipe 115. The conductive joint 114 is configured to electrically connect to the motor control unit, the conductive joint 114 is configured to mount a conductive sheet, and the conductive sheet is configured to electrically connect to an interface of the motor control unit. The liquid inlet pipe 115 is provided with a liquid inlet channel 116. The outlet part 112 is configured to electrically connect to the stator of the motor, and specifically, a lead of a motor stator winding is electrically connected to the outlet part. The main conductive part 113 is electrically connected between the conductive joint 114 and the outlet part 112. A flow channel 117 is arranged in the main conductive part 113 (in FIG. 3 and FIG. 4, the dashed line in the main conductive part 113 indicates the flow channel), and an inlet of the flow channel 117 (a position at which the main conductive part 113 is interconnected to the inlet part 111, not marked) is interconnected to the liquid inlet channel 116. An outlet 1171 of the flow channel 117 is adjacent to the outlet part 112, so that coolant of a cooling system can flow through the liquid inlet channel 116 and the flow channel 117, and be sprayed on the outlet part 112.

The inlet part 111 is pillar-shaped as a whole and is an integral conductive structure. The inlet part 111 includes a first end face S1, a second end face S2, and a side face S3 connected between the first end face S1 and the second end face S2, and the first end face S1 and the second end face S2 are opposite in directions. Outer contours of the first end face S1 and the second end face S2 may be the same, and may be square, circular, or any other shape. The first end face S1 is provided with a threaded hole 1112. The threaded hole 1112 is configured to mount the conductive sheet electrically connected to the motor control unit. The second end face S2 is provided with the liquid inlet channel 116. Specifically, an opening of one end of the liquid inlet channel 116 is located on the second end face S2, and an opening of the other end of the liquid inlet channel 116 is located on a side wall of the liquid inlet pipe 115, and is interconnected to the flow channel 117 in the main conductive part 113. The threaded hole 1112 is isolated from and not communicating with the liquid inlet channel 116, so that the coolant does not enter the threaded hole 1112, and reliability of the electrical connection between the conductive sheet and the conductive joint 114 of the inlet part 111 is ensured. The side face S3 may be a cylindrical surface or formed by a plurality of successively connected planes. The main conductive part 113 is fixedly connected to the side face S3, the conductive joint 114 is formed between the main conductive part 113 and the first end face S1, and the liquid inlet pipe 115 is formed between the main conductive part 113 and the second end face S2.

The conductive joint 114 and the liquid inlet pipe 115 are respectively located on two sides of the main conductive part 113. The conductive joint 114 and the liquid inlet pipe 115 may be of columnar structures with similar appearances. The conductive joint 114, the liquid inlet pipe 115, and one end of the main conductive part 113 form a T-shaped structure. A positioning part 1142 is provided on a side face of the conductive joint 114, and the positioning part 1142 is of a groove structure formed by removing a part of material from the cylindrical side face, and an outer surface of the positioning part 1142 is of a polygonal cylinder surface. Specifically, the positioning part 1142 may be of a hexagonal structure, a knurled structure, or a circular ring-shaped structure. The positioning part 1142 mainly serves to improve connection strength between the inlet part 111 of the conductive component 11 and an injection molded part that wraps a periphery of the conductive component 11, and the positioning part 114 also serves to prevent rotation of the inlet part when the conductive joint 114 and the conductive sheet electrically connected to the motor control unit are mounted.

The main conductive part 113 is tubular, and may be bent and extended based on a space of a specific application environment. The main conductive part 113 may include an arc-shaped section and a straight section. In this application, the flow channel 117 is arranged in the main conductive part 113, so that the main conductive part 113 is more easily bent. In this implementation, from the inlet part 111 to the outlet part 112, a cross-sectional size of the main conductive part 113 remains unchanged.

In the implementations shown in FIG. 3 and FIG. 4, an inner wall of the flow channel 117 of the main conductive part 113 has a smooth surface, and a cross section of the flow channel 117 may be circular, square, oval, or any other shape. The flow channel 117 with a smooth surface is easy to manufacture and has an advantage of low costs. In addition, standard pipe fittings may be directly selected. For example, a copper pipe is directly used.

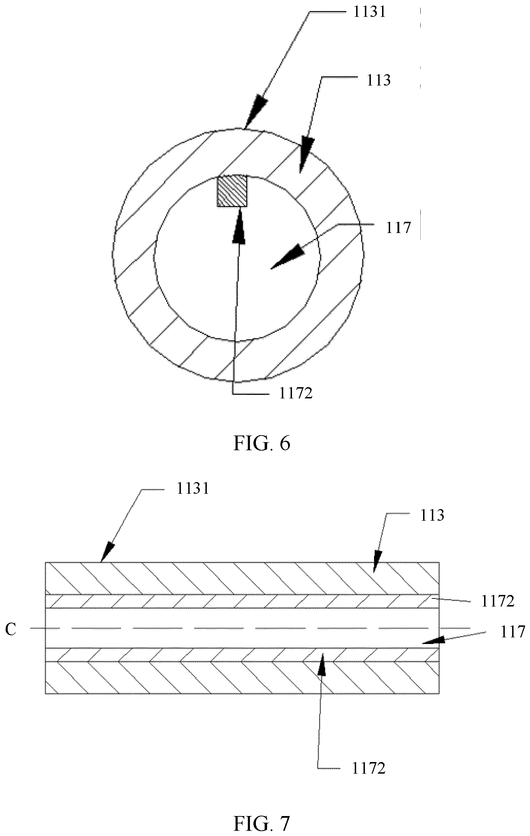

Refer to FIG. 5 and FIG. 6. In a possible implementation, an inwardly convex toothed structure 1172 is arranged on the inner wall of the flow channel 117 of the main conductive part 113. The inwardly convex toothed structure 1172 is designed so that a contact area of the coolant and the main conductive part 113 is increased, thereby helping to increase a heat exchange area. FIG. 5 schematically shows a part of the main conductive part 113. To facilitate marking of the toothed structure 1172, an annular pipe wall of the main conductive part 113 and the toothed structure 1172 are represented by using section lines in different directions in FIG. 5, just to distinguish the annular pipe wall from the toothed structure 1172. Actually, the toothed structure 1172 may be integrated with the annular pipe wall of the main conductive part 113.

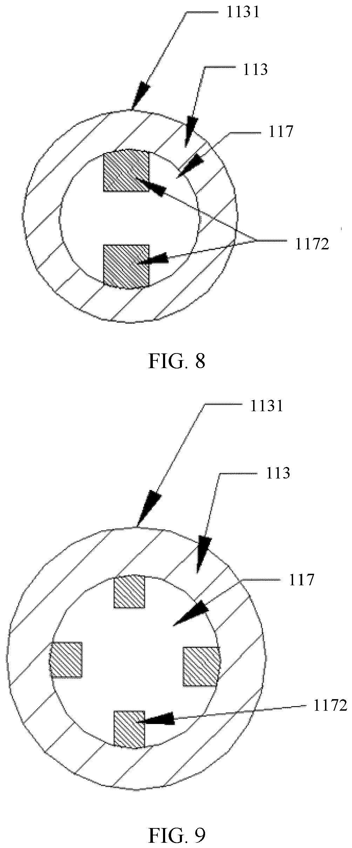

There may be one, two, or more inwardly convex toothed structures 1172 on the inner wall of the flow channel 117 of the main conductive part 113. In embodiments shown in FIG. 5 and FIG. 6, there is one inwardly convex toothed structure 1172. Refer to FIG. 7 and FIG. 8. In a possible implementation, the inwardly convex toothed structure 1172 extends from one end of the flow channel 17 of the main conductive part 113 that is near the inlet part 111 to one end of the flow channel 17 of the main conductive part 113 that is near the outlet part 112. The main conductive part 113 includes a central axis C, and the central axis C extends from the inlet part 111 to the outlet part 112. There are two inwardly convex toothed structures 1172, and the inwardly convex toothed structures 1172 are symmetrically distributed on two sides of the central axis C. When there are three or more inwardly convex toothed structures 1172, distribution of the inwardly convex toothed structures may be evenly spaced circumferential distribution. In the implementation shown in FIG. 9, four inwardly convex toothed structures 1172 are arranged on the inner wall of the flow channel 117 of the main conductive part 113, and are evenly spaced on the inner wall with every two opposite to each other.

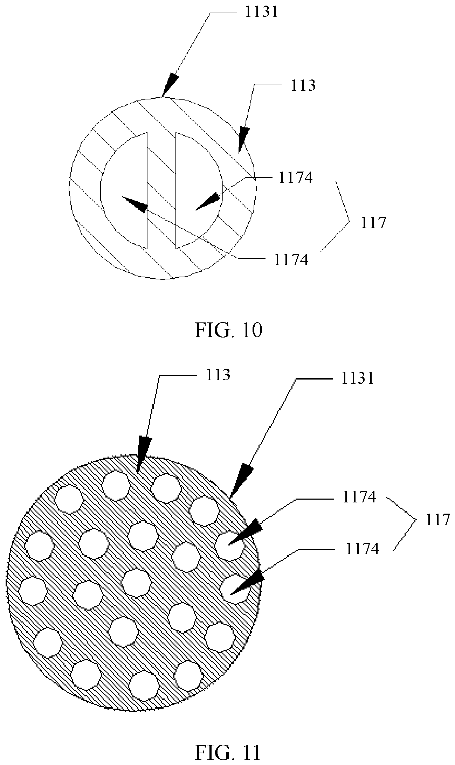

Refer to FIG. 10 and FIG. 11. The flow channel 117 of the main conductive part 113 may include at least two parallel sub-flow channels 1174, and the sub-flow channels 1174 are isolated from each other and each extend from the inlet of the flow channel 117 to the outlet of the flow channel 117. A shape of a cross section of each sub-flow channel 1174 may be circular, semi-circular, square, or any shape. In the implementation shown in FIG. 10, two sub-flow channels 1174 are arranged in the main conductive part 113, both of the sub-flow channels 1174 are semi-circular, and a partition wall is arranged between the two semi-circular sub-flow channels 1174. The partition wall and an outer wall of the main conductive part 113 may be formed integrally and made of a same material. In the implementation shown in FIG. 11, a plurality of sub-flow channels 1174 are arranged in the main conductive part 113, and cross-sectional sizes of the plurality of sub-flow channels 1174 may be the same. For example, all the sub-flow channels 1174 may be circular, oval, square, triangular, or any other shape. The plurality of sub-flow channels 1174 may be arranged in a honeycomb shape or in an array arrangement. The plurality of sub-flow channels 1174 may be arranged in a regular manner or in an irregular manner. This is not limited in this application. The sub-flow channels 1174 are arranged so that the contact area of the coolant and the main conductive part can also be increased, thereby helping to increase a heat exchange area. There may be two or more sub-flow channels 1174. Coolant is distributed from the liquid inlet channel 116 of the inlet part 111 to the sub-flow channels 1174. The arrangement of the sub-flow channels 1174 complicates a structure of the main conductive part 113, but can divide one stream of coolant into a plurality of streams of coolant, which is similar to a difference between a faucet and a shower head. Therefore, the sub-flow channels 1174 form a structure of a shower head at the position of the outlet part 112, thereby expanding a spraying area and improving a liquid cooling heat dissipation effect.

In various possible implementations shown in FIG. 3 to FIG. 11, an outer surface 1131 of the main conductive part 113 is a smooth surface, and a cross section of the outer surface 1131 of the main conductive part 113 may be circular, square, oval, polygonal, or the like. The main conductive part 113 with the smooth outer surface 1131 has a simple structure, so that materials are easily selected. For example, a tubular structure such as a copper pipe or a square pipe may be directly selected.

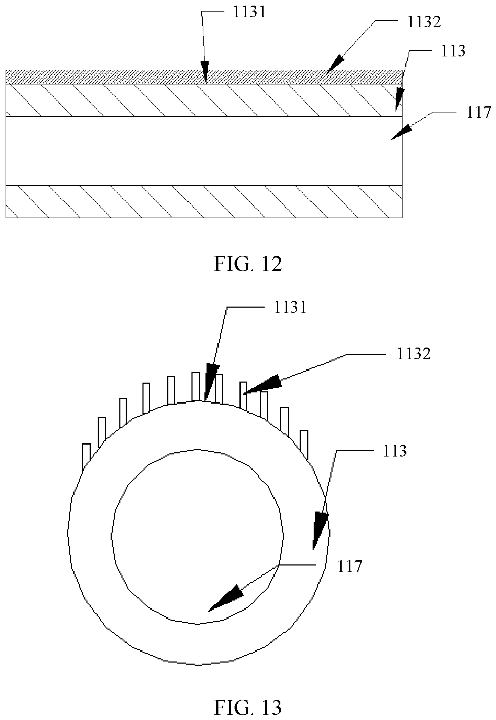

Refer to FIG. 12 and FIG. 13. In a possible implementation, a fin structure 1132 is protruded from the outer surface 1131 of the main conductive part 113. The fin structure 1132 can improve a heat dissipation capability of the main conductive part 113. The fin structure 1132 may be arranged on a partial outer surface of the main conductive part 113, or may be spaced circumferentially and surround the outer surface 1131 of the main conductive part 113. The fin structure 1132 and the main conductive part 113 may be made of a same material and integrated by welding. The fin structure 1132 may alternatively be integrally formed on the outer surface 1131 of the main conductive part 113 by machining.

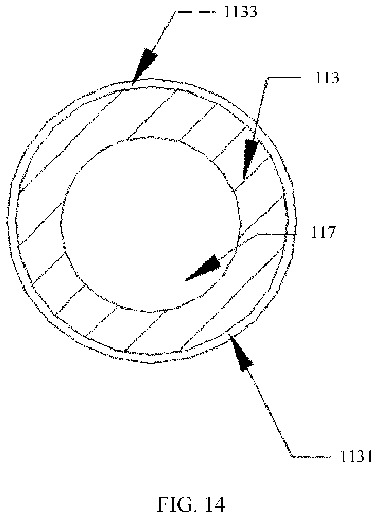

Refer to FIG. 14. In a possible implementation, the outer surface 1131 of the main conductive part 113 is provided with a heat absorption and dissipation film 1133, and the heat absorption and dissipation film 1133 is configured to improve heat dissipation efficiency of the main conductive part 113. For example, the heat absorption and dissipation film may be made of graphite.

It may be understood that both the fin structure 1132 arranged on the outer surface 1131 of the main conductive part 113 and the toothed structure 1172 arranged on the inner wall of the flow channel 117 may be applied in a specific implementation. The fin structure 1132 arranged on the outer surface 1131 of the main conductive part 113 and a manner in which at least two sub-flow channels 1174 are arranged may also be applied in a same specific implementation. In another implementation, the toothed structure 1172 arranged on the inner wall of the flow channel 117 may alternatively be arranged on an inner wall of each sub-flow channel 1174. The heat absorption and dissipation film 1133 arranged on the outer surface of the main conductive part 113 and the toothed structure 1172 arranged on the inner wall of the flow channel 117 may be applied in a specific implementation. Alternatively, the heat absorption and dissipation film 1133 arranged on the outer surface of the main conductive part 113 and the arrangement manner of the at least two sub-flow channels 1174 may be applied in a same specific implementation. Alternatively, a structure of the heat absorption and dissipation film may be arranged on an outer surface of the fin structure 1132 on the outer surface 1131 of the main conductive part 113.

Refer to FIG. 3 and FIG. 4. The outlet part 112 includes a mounting plate 1121. The mounting plate 1121 is welded to a periphery of one end 1134 of the main conductive part 113 and electrically connected to the main conductive part 113. The end 1134 of the main conductive part 113 is of a bent tubular shape, so that an outlet section of the flow channel 117 in the main conductive part 113 is bent and extended to change a direction of the outlet of the flow channel 117 so that the outlet of the flow channel 117 faces a position of a mounting hole 1122 of the mounting plate 1121. The mounting hole 1122 provided on the mounting plate 1121 is in a shape of a via hole. The mounting plate 1121 includes a first surface 1123 and a second surface 1124 that are arranged oppositely. The mounting hole 1122 runs through the first surface 1123 and the second surface 1124. The first surface 1123 is configured to arrange the motor stator winding or a connecting wire electrically connected to the motor stator winding. The second surface 1123 is connected to a nut 1125. The nut 1125 is arranged to surround the mounting hole 1122, and the nut 1125 mates with a bolt or a stud that penetrates the mounting plate 1121 and is configured to fix the motor stator winding or the connecting wire electrically connected to the motor stator winding. It should be noted that the nut 1125 herein may alternatively be another fastener, such as a cylindrical structure with a threaded hole, and the threaded hole in the cylindrical structure is configured to fit a bolt or a stud to fix the motor stator winding or the connecting wire electrically connected to the motor winding.

The main conductive part 113 includes a bent tubular end portion 1135. The outlet part 112 is connected to the end portion 1135. The bent tubular end portion 1135 is arranged so that the outlet of the flow channel 117 in the main conductive part 113 faces a position of the mounting hole 1122 on the outlet part 112. It may be understood that the outlet of the flow channel 117 is arranged to face the outlet part 112, so that the coolant can be sprayed directly to the outlet part 112 after flowing out from the outlet of the main conductive part 113, thereby improving liquid cooling efficiency for the outlet part 112.

In another possible implementation, a direction of the outlet of the flow channel 117 may not face the outlet part 112. For example, the coolant is sprayed to another object (which may be a blocking wall extending over the motor housing), and then is reflected to the outlet part by the another object. In other words, the coolant is sprayed out from the outlet of the flow channel, and then may be reflected to the outlet part. A shield may be arranged on a periphery of the outlet part to reflect the coolant. Alternatively, the coolant may be reflected by using a partial structure of the motor housing.

In another possible implementation, the outlet of the flow channel 117 may be inclined at a specific angle relative to the direction of the outlet part for spraying the coolant, and the direction of the inclined spraying may be toward a position of a lead-out wire of the motor winding. That is, the coolant may not be sprayed directly at a connection position between the lead-out wire of the motor winding and the outlet part 112, but may be sprayed toward the middle of the lead-out wire of the motor winding. An end of the lead-out wire of the motor winding is fixed on the mounting plate 1121 of the outlet part 112. The middle of the lead-out wire of the motor winding refers to a part of a connecting wire that extends from the motor winding and does not extend to the end.

The mounting plate 1121 is provided with a notch 1126. Specifically, the notch 1126 is concavely formed on one edge of the mounting plate 1121. The notch 1126 may be rectangular or arcuate, and a shape of the notch 1126 may match a shape of the end 1135 of the main conductive part 113. The end 1135 of the main conductive part 113 extends into the notch 1126 to implement positioning between the mounting plate 1121 and the main conductive part 112, and then an inner wall of the notch 1126 and an outer surface of the end 1135 of the main conductive part 113 are fixed by welding or may be fixed by dispensing glue (conductive glue).

In this application, the inlet part 111 of the conductive component 11 is electrically connected to the motor control unit, and the outlet part 112 is electrically connected to the motor, thereby implementing a conductive function between the motor control unit and the motor. Moreover, the liquid inlet channel 116 and the flow channel 117 are arranged inside the conductive component 11, so that the liquid cooling conductive structure implements the conductive function, and the coolant can flow through the liquid inlet channel 116 and the flow channel 117, and then be sprayed on the outlet part, that is, perform liquid cooling heat dissipation on a joint at which the outlet part 112 is connected to the motor. The coolant is coolant in a cooling system of an electric vehicle powertrain. After passing through a reducer in an electric vehicle, the coolant enters the motor and may flow into the flow channel 117 of the main conductive part 113 through the liquid inlet channel 116. After being sprayed on the outlet part 112, the coolant flows back to the cooling system through a pipeline inside the motor, thereby forming a liquid cooling circulation and continuously dissipating heat.

The liquid inlet channel 116 and the flow channel 117 inside the conductive component 11 are arranged, so that the conductive component 11 is hollow. Therefore, in a process of electricity conduction, a current density can be improved, and a high current density enables the liquid cooling conductive structure to have good conductivity.

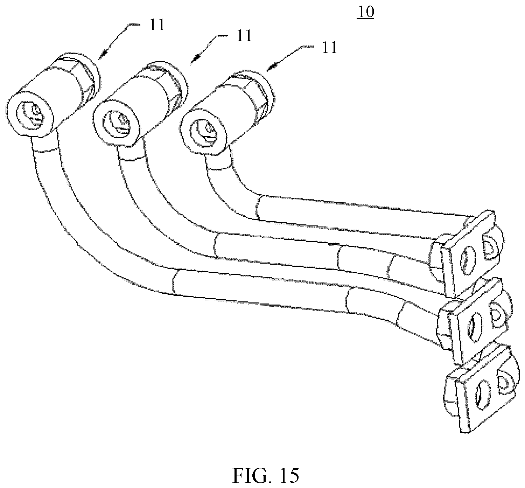

Refer to FIG. 15. A liquid cooling conductive structure provided in an implementation of this application includes three conductive components 11, and the three conductive components 11 are spaced side by side to transmit a three-phase current. A specific structure of each conductive component 11 is described above, and details are not described herein. The foregoing describes the conductive component 11 provided in various implementations. The three conductive components 11 included in the liquid cooling conductive structure may be conductive components 11 provided in a same implementation. That is, the three conductive components 11 may have a same structure. Certainly, the three conductive components 11 may alternatively be conductive components 11 provided in different implementations. That is, the three conductive components 11 may not have a same structure, provided that all the three conductive components 11 have a conductive function and are provided with a liquid inlet channel and a flow channel inside for coolant to flow through and be sprayed on the outlet part. That is, the technical problem to be solved in this application can be solved.

The liquid cooling conductive structure provided in this application includes an insulator. Specifically, the insulator wraps a periphery of the conductive component. Specifically, the insulator wraps the inlet part, but an opening position of the liquid inlet channel 116 of the liquid inlet pipe 115 of the inlet part 111 and the threaded hole 1112 of the conductive joint 114 need to be exposed. The insulator wraps the main conductive part 113, but the outlet 1171 of the main conductive part 113 that is adjacent to the flow channel 117 of the outlet part 112 needs to be exposed. The insulator partially wraps the outlet part 112, and the first surface 1123 of the mounting plate 1121 of the outlet part 112 needs to be exposed.

The insulator functions to protect the conductive component, isolate the conductive component from another conducting element, and mount the liquid cooling conductive structure. A shape and a size of the insulator may match a mounting environment of the liquid cooling conductive structure, and may be flat plate-shaped or arc-shaped. For example, when the liquid cooling conductive structure is mounted on a motor housing, because the motor housing is usually a metal housing, the conductive component cannot be directly connected to the housing. Instead, an insulator needs to be arranged outside the conductive component, and the conductive component is mounted on the motor housing by using the insulator. The insulator may be of a plastic material, and the conductive component may be of a metal material. The conductive component may be mounted inside the insulator, or may be formed inside the insulator by using an integral molding process. For example, by using an in-mold injection molding process, the conductive component is transferred into a mold as an insert, and the plastic material is formed at the periphery of the conductive component by using an injection molding process to form the insulator.

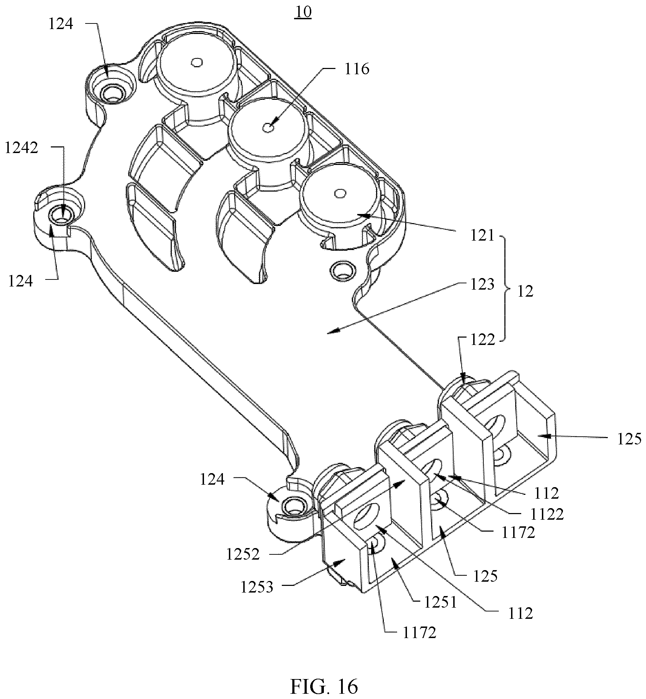

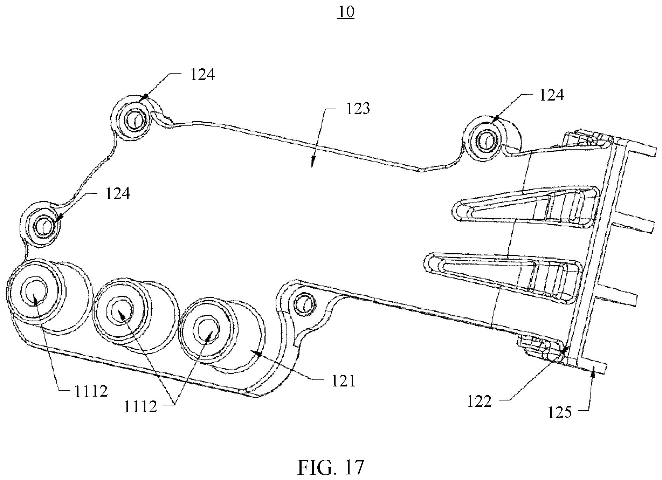

FIG. 16, FIG. 17, and FIG. 18 are respectively schematic diagrams in three different directions of the liquid cooling conductive structure 10 that has the insulator 12. The insulator 12 includes a first part 121, a second part 122, and a main body part 123 connected between the first part 121 and the second part 122. The first part 121 wraps the inlet part 111. In addition, the opening position of the liquid inlet channel 116 of the liquid inlet pipe 115 and the threaded hole 1112 of the conductive joint 114 are exposed from two opposite ends of the first part 121. The second part 122 wraps a part of the outlet part 112, so that the first surface 1123 of the mounting plate 1121 of the outlet part 112 is exposed. The second part 122 wraps the nut 1125 of the outlet part 112 inside. The main body part 123 includes the main conductive part 113, and the outlet 1171 of the flow channel 117 of the main conductive part 113 is exposed (as shown in FIG. 16). The main conductive parts 113 are arranged in a coplanar manner, and the main body part 123 is of a flat plate structure. In this structure, the liquid cooling conductive structure can be conveniently mounted to the motor housing.

In a possible implementation, the insulator 12 may be made of a flexible insulating material, for example, silica gel. After the insulator 12 wraps the three conductive components 11, a part of the insulator 12 connected between the conductive components 11 is flexible and can be deformed. Therefore, when being mounted to the motor housing, the liquid cooling conductive structure 10 may match various mounting environments. For example, when a mounting surface on the housing is not flat, the insulator 12 can be well attached to the mounting surface because the insulator 12 can be deformed. In addition to an advantage of being convenient for mounting, configuration of the insulator 12 made of a flexible material provides cushioning against vibration in the environment, so that vibration of the motor can be adsorbed, and smooth operation of the electric vehicle is ensured.

An edge position of the insulator 12 includes a fixed part 124. Specifically, there are three fixed parts 124, and the three fixed parts are respectively located at an edge of the first part 121, an edge of the main body part 123, and an edge of the second part 122. Each fixed part 124 is provided with a fixing hole 1242. The fixing hole 1242 is configured to fix the liquid cooling conductive structure 10 to the motor housing in a manner of fitting a screw.

A shield 125 is arranged on a periphery of the outlet part 112 of the conductive component 11, and the outlet 1171 of the flow channel 117 is located between the outlet part 112 and the shield 125. The shield 125 is made of an insulating material, for example, a plastic plate, and arranged between adjacent outlet parts 112, so that the adjacent outlet parts 112 can be insulated. The shield 125 also can block the coolant and reflect the coolant. Therefore, after being sprayed out, the coolant is sprayed on the outlet part 112 in a more centralized manner, thereby improving liquid cooling efficiency.

The shield 125 includes a first plate 1251 and two second plates 1252 and 1253, one end of each of the second plates 1252 and 1253 is respectively connected on two opposite sides of the first plate 1251, and a mounting opening is formed between the other ends of the second plates 1252 and 1253 (that is, a side of the outlet part 112 that is far away from the outlet 1171 of the flow channel 117). A position of the mounting opening is used to connect a connector of the motor stator winding to the outlet part 112. The first plate 1251 and the two second plates 1252 and 1253 are all flat plates, and the two second plates 1252 and 1253 are parallel to each other and perpendicular to the first plate 1251. In another possible implementation, the first plate 1251 may be arcuate, or the second plates 1252 and 1253 may be arcuate, or all the first plate 1251 and the second plates 1252 and 1253 are arcuate and together form an arc reflecting surface with a same curvature, and the arc reflecting surface faces the outlet part 112. The first plate 1251 and the second plates 1252 and 1253 may be of a split structure, and there may be a gap between the first plate 1251 and each of the second plates 1252 and 1253, or the first plate 1251 and the second plates 1252 and 1253 may be seamlessly interconnected. Alternatively, the first plate 1251 and the second plates 1252 and 1253 may be of an integrated structure.

The outlet 1171 of the flow channel 117 is located between the first plate 1251 and the outlet part 112. The outlet part 112 forms a wiring position of the liquid cooling conductive structure and the motor stator winding. Because being blocked by the first plate 1251, the coolant can flow directly to the wiring position after flowing out from the outlet, and the first plate 1251 and the second plates 1252 and 1253 can block the coolant, so as to prevent the coolant from being sprayed to another position. In addition, the coolant being sprayed to the shield 125 may also be reflected to the wiring position of the outlet part 112, thereby improving a cooling effect.

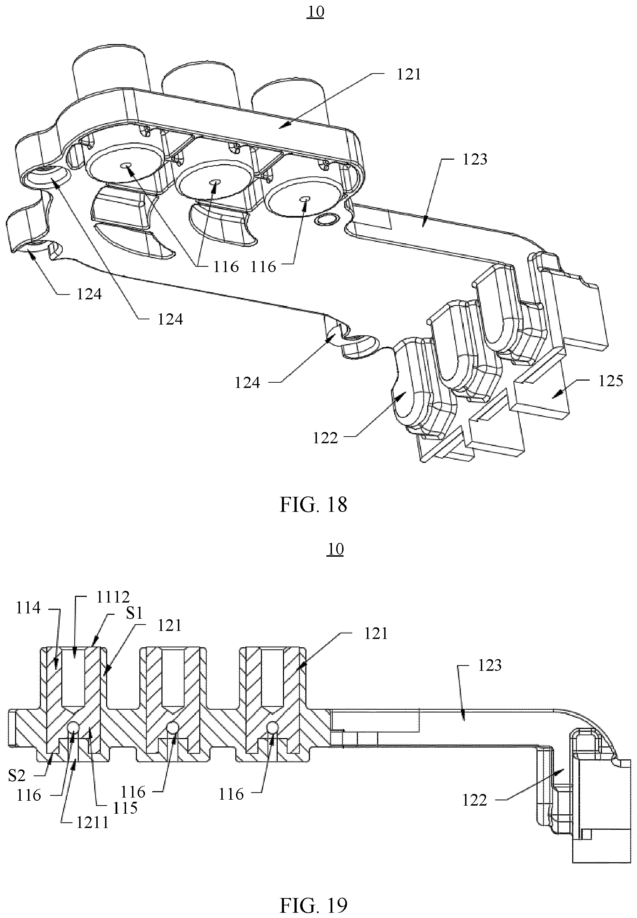

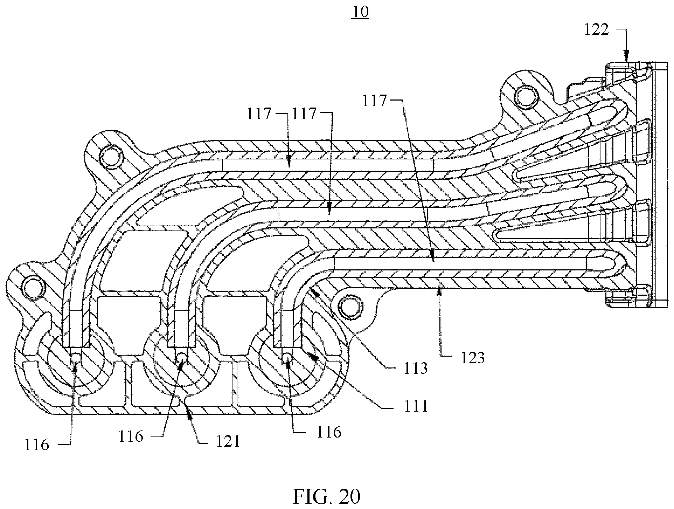

FIG. 19 and FIG. 20 are sectional views of the liquid cooling conductive structure 10 that has the insulator 12. As can be seen from FIG. 19, the first part 121 of the insulator 12 covers the side face of the conductive joint 114 of the inlet part 111, but does not cover the first end face S1. In this way, the first end face S1 is reserved as an interface for electrical connection. The first part 121 covers a side face of the liquid inlet pipe 115 and the second end part S2, but the first part 121 is provided with an opening 1211. Through the opening 1121, the liquid inlet channel 116 of the liquid inlet pipe 115 can communicate with the outside, and the coolant can enter the liquid inlet channel 116 from the opening 1211. As can be seen from FIG. 20, the liquid inlet channel 116 communicates with the flow channel 117 in the main conductive part 113. It can be seen that the main conductive part 113 is interconnected to the inlet part 111. An end portion of the main conductive part 113 extends into the inlet part 111, so that the liquid inlet channel 116 communicates with the flow channel 117.

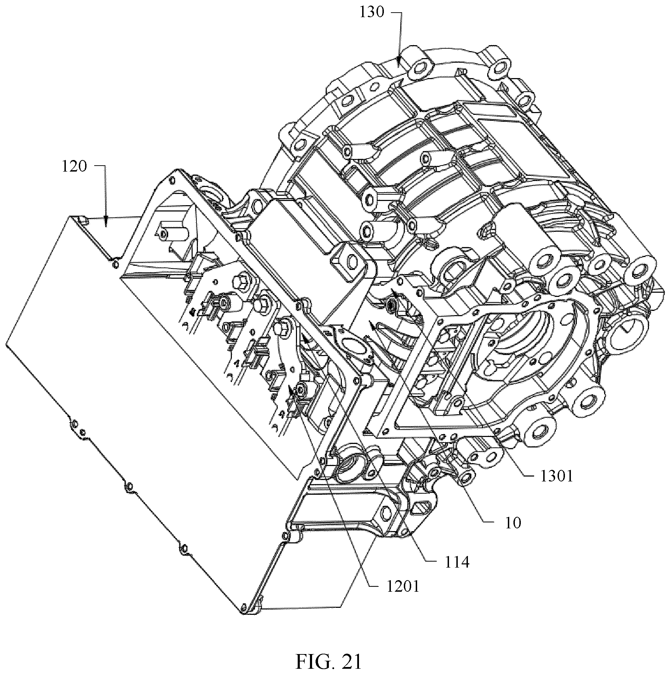

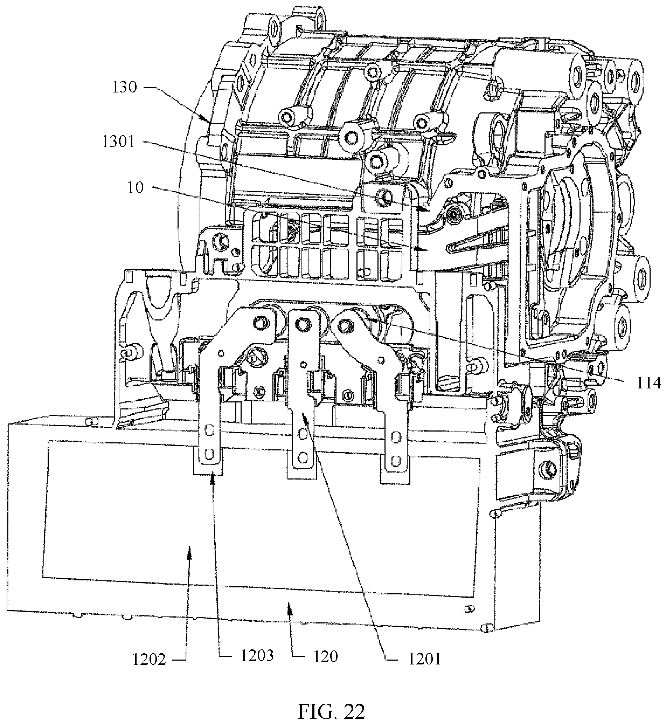

Refer to FIG. 21 and FIG. 22. The motor 130 provided in this application includes a motor housing 1301 and a stator (in FIG. 21, the stator is blocked by the motor housing 1301 and is not shown) and a liquid cooling conductive structure 10. It may be understood that a stator and a rotor are arranged in the motor housing 1301. The stator is arranged at a periphery of the rotor, and the motor housing is arranged to surround the stator.

The electric vehicle powertrain provided in this application includes a motor control unit 120 and a motor 130, and the conductive joint 114 of the liquid cooling conductive structure 10 is electrically connected to the motor control unit 124 by using a conductive sheet 1201. The conductive sheet 1201 may be a copper busbar or a transmission line of another type.

Refer to FIG. 22. A circuit board 1202 is arranged in the motor control unit 120, and a circuit structure, such as an inverter circuit and a motor angle detection and diagnosis circuit, may be arranged on the circuit board 1202, a three-phase output interface 1203 is further arranged on the circuit board 1202, and the conductive sheet 1201 is fixedly connected to the three-phase output interface 1203.

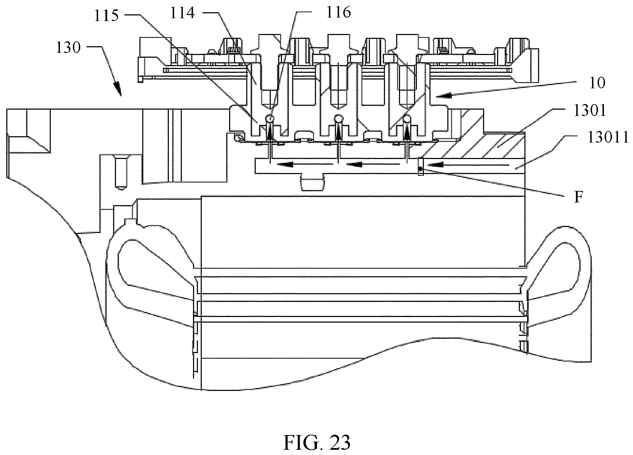

FIG. 23 is a partial sectional view of the motor 130, and shows a position relationship between a coolant channel 13011 in the motor housing 1301 and the inlet part of the liquid cooling conductive structure 10 (specifically, the conductive joint 114 and the liquid inlet pipe 115 are included). The coolant channel 13011 communicates with the liquid inlet channel 116 in liquid inlet pipe 115 of the liquid cooling conductive structure 10. In FIG. 23, an arrow in the coolant channel 13011 indicates a flow direction of the coolant.

A filter structure F is arranged in the coolant channel 13011 in the motor housing 1301. After entering the motor housing 1301, the coolant passes through the filter structure F and then enters the liquid inlet pipe 115, and flows in the liquid cooling conductive structure 10. The filter structure F can filter out large-particle impurities in the coolant to prevent the liquid cooling conductive structure 10 from being blocked. The filter structure F may be arranged at an inlet position of the coolant channel 13011 of the motor housing 1301, or may be arranged inside the coolant channel 13011, provided that the filter structure F is located upstream of each liquid inlet channel 116.

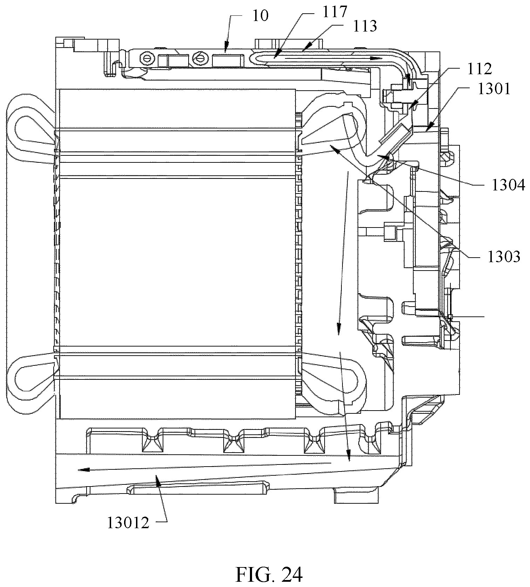

FIG. 24 is a sectional view of the motor 130, and shows the flow channel 117 in the main conductive part 113 of the liquid cooling conductive structure 10, the outlet part 112, the motor stator winding 1303, a winding connecting wire 1304, and a coolant outflow channel 13012 in the motor housing 1301. In FIG. 24, the liquid cooling conductive structure 10 is located at a top of the motor housing 1301, and the coolant outflow channel 13012 is located at a bottom of the motor housing. After entering the flow channel 117, the coolant is sprayed out from the outlet of the flow channel 117, and then is sprayed on the outlet part 112. The motor stator winding 1303 is connected to the outlet part 112 by using the winding connecting wire 1304, and the coolant is sprayed to a wiring position of the winding connecting wire 1304 and the outlet part 112 to perform liquid cooling heat dissipation on the stator winding. The sprayed-out coolant flows in the motor housing 1301 and flows to the coolant outflow channel 13012, and the coolant outflow channel 13012 communicates with the liquid cooling system of the electric vehicle, thereby forming a circulation flow of the coolant.

A liquid cooling conductive structure, a motor, and an electric vehicle powertrain provided in this application are described in detail above. The principle and embodiments of this application are described herein through specific examples. The description about the embodiments of this application is merely provided to help understand the method and core ideas of this application. In addition, a person of ordinary skill in the art can make variations and modifications to this application in terms of the specific embodiments and application scopes according to the ideas of this application. Therefore, the content of specification shall not be construed as a limit to this application.

## Claims

1. A conductive component, electrically connected between a first electronic device and a second electronic device, wherein a liquid cooling channel is arranged in the conductive component, the liquid cooling channel is provided with an inlet and an outlet, so that coolant enters the liquid cooling channel from the inlet and flows out from the outlet, and the outlet is adjacent to an electrical connection between the conductive component and the second electronic device, so that the coolant performs liquid cooling heat dissipation on the electrical connection between the conductive component and the second electronic device.

2. The conductive component according to claim 1, wherein the conductive component comprises an inlet part, an outlet part, and a main conductive part connected between the inlet part and the outlet part, the inlet part is configured to electrically connect to the first electronic device, the inlet is formed at the inlet part, the outlet part is configured to electrically connect to the second electronic device, the outlet is formed at the main conductive part, and the outlet is located at a position at which the main conductive part is connected to the outlet part.

3. The conductive component according to claim 2, wherein the outlet faces the electrical connection between the conductive component and the second electronic device, so that the coolant flows directly to the outlet part after flowing out from the outlet.

4. The conductive component according to claim 2, wherein the outlet faces a barrier, and the coolant is reflected by the barrier, so that the coolant is reflected to the outlet part after flowing out from the outlet.

5. The conductive component according to claim 3 or 4, wherein the liquid cooling channel comprises a flow channel in the main conductive part, an outlet of the flow channel is the outlet of the liquid cooling channel, and an inner wall of the flow channel is a smooth surface.

6. The conductive component according to claim 3 or 4, wherein the liquid cooling channel comprises a flow channel in the main conductive part, an outlet of the flow channel is the outlet of the liquid cooling channel, and an inner wall of the flow channel is provided with an inwardly convex toothed structure.

7. The conductive component according to claim 3 or 4, wherein the liquid cooling channel comprises a liquid inlet channel in the inlet part and a flow channel in the main conductive part, an outlet of the flow channel is the outlet of the liquid cooling channel, the flow channel comprises at least two parallel sub-flow channels, the sub-flow channels are isolated from each other and each extend from a connection between the flow channel and the liquid inlet channel to the outlet of the flow channel.

8. The conductive component according to claim 3 or 4, wherein an outer surface of the main conductive part is a smooth surface, or a fin structure is protruded from an outer surface of the main conductive part.

9. The conductive component according to claim 3 or 4, wherein an outer surface of the main conductive part is provided with a heat absorption and dissipation film, and the heat absorption and dissipation film is configured to improve heat dissipation efficiency of the main conductive part.

10. The conductive component according to claim 8, wherein the heat absorption and dissipation film is made of graphite.

11. The conductive component according to claim 3 or 4, wherein the inlet part comprises a first end face, a second end face, and a side face connected between the first end face and the second end face, and the main conductive part is fixedly connected to the side face; a conductive joint is formed between the main conductive part and the first end face, and the conductive joint is configured to electrically connect to the first electronic device; and a liquid inlet pipe is formed between the main conductive part and the second end face, a liquid inlet channel is arranged in the liquid inlet pipe, the liquid inlet channel communicates with a flow channel arranged in the main conductive part and jointly forms the liquid cooling channel, and the inlet of the liquid cooling channel is located on the second end face.

12. The conductive component according to claim 11, wherein the inlet part is an integral structure, and the first end face and the second end face are opposite in directions.

13. A liquid cooling conductive structure, comprising an insulator and the conductive component according to any one of claims 1 to 12, wherein the insulator wraps a periphery of the conductive component to insulate the conductive component from another conducting component.

14. The liquid cooling conductive structure according to claim 13, wherein there are at least two conductive components, and the insulator wraps the at least two conductive components.

15. The liquid cooling conductive structure according to claim 14, wherein a material of the insulator is a flexible insulating material, so that in a process of mounting the liquid cooling conductive structure to a first electronic device and a second electronic device, a position of each conductive component can be adjusted.

16. The liquid cooling conductive structure according to any one of claims 13 to 15, wherein a shield is arranged at a periphery of an outlet of a liquid cooling channel of each conductive component, and the outlet is located between the shield and an electrical connection between the conductive component and the second electronic device.

17. The liquid cooling conductive structure according to claim 16, wherein the shield comprises a first plate and two second plates, one end of each of the two second plates is respectively connected to two sides of the first plate, a mounting opening is formed between the other ends of the two second plates, and the outlet of the liquid cooling channel is located between the first plate and the electrical connection between the conductive component and the second electronic device.

18. A motor, comprising a motor housing, a stator, and the liquid cooling conductive structure according to any one of claims 13 to 17, wherein the liquid cooling conductive structure is mounted to the motor housing, a liquid cooling channel communicates with a coolant channel in the motor housing, a second electronic device is the stator, and a first electronic device is a motor control unit.

19. The motor according to claim 18, wherein a filter structure is arranged in the coolant channel in the motor housing, and after entering the motor, the coolant flows through the filter structure and then enters the liquid cooling channel of the conductive component.

20. An electric vehicle powertrain, comprising a motor control unit and the motor according to claim 18 or 19, wherein one end of a conductive component is electrically connected to the motor control unit.
